# EUROPEAN PATENT SPECIFICATION

(11) **EP 1 820 686 B1**
(45) Date of publication and mention of the grant of the patent: **13.04.2016**
(21) Application number: 06110168.9
(22) Date of filing: 20.02.2006
(51) Int. Cl.: B60N 2/02, B60N 2/68

(54) **Panel**
Panel
Panneau

(43) Date of publication of application: 22.08.2007
(73) Proprietor: Volvo Car Corporation, 405 31 Göteborg (SE)
(72) Inventor: Lagerberg, Göran, 439 31, Onsala (SE); Bengtsson, Johan, 414 58, Göteborg (SE); Eriksson, Siw, 444 92, Jörlanda (SE); Johansson, Tommy, 471 60, Myggenäs (SE); Persson, Reine, 441 65, Alingsås (SE)
(74) Representative: Valea AB

(56) References cited:
- US-A- 5 668 357
- US-A1- 2002 041 964
- US-B1- 6 544 449
- PATENT ABSTRACTS OF JAPAN vol. 1999, no. 05, 31 May 1999 (1999-05-31) -& JP 11 042136 A (TAKASHIMAYA NIPPATSU KOGYO KK), 16 February 1999 (1999-02-16)
- PATENT ABSTRACTS OF JAPAN vol. 1998, no. 12, 31 October 1998 (1998-10-31) -& JP 10 179306 A (IKEDA BUSSAN CO LTD), 7 July 1998 (1998-07-07)
- PATENT ABSTRACTS OF JAPAN vol. 1998, no. 10, 31 August 1998 (1998-08-31) -& JP 10 137065 A (IKEDA BUSSAN CO LTD), 26 May 1998 (1998-05-26)

## Description

### TECHNICAL FIELD

The present invention concerns a panel comprising at least one edge adapted to abut against at least one surface of at least one upholstered object in a vehicle. The expression "upholstered object" is intended to mean any object that is provided with materials, such as fabric or padding, which are used to make a soft, protective or aesthetically pleasing covering.

### BACKGROUND OF THE INVENTION

Upholstered seats have long been used inside the passenger compartments of vehicles, as a means for protecting the occupants from injury in the event of a collision and for providing a comfortable and aesthetically pleasing environment inside the vehicle. Impact absorbing foams are usually applied over hard surfaces inside the passenger compartment, in order to provide an energy-absorbing cushioning layer. The impact absorbing foams are usually covered with a decorative layer, such as a fabric layer comprising natural or synthetic leather for example.

A side panel is usually provided on at least one side of a vehicle's seat. The side panel may serve as a pedestal or may house actuators for adjusting the horizontal or vertical position of the seat or its inclination. For aesthetic reasons the side panel is arranged to provide a tight fit with the surface of the vehicle seat. The seat may move with respect to the side panel during the operation of the vehicle as a result of vibrations caused by the road surface, the engine, a driver or passenger sitting down or moving about in the seat or as a result of a vehicle occupant adjusting the position or inclination of the seat. The edge of the side panel therefore tends to rub against the upholstered surface of the seat and an undesirable squeaking noise may be emitted, which can be annoying for the occupants of the vehicle and which can disrupt a driver's concentration. The rubbing action may also damage the upholstered surface of the vehicle seat.

It is known to cover at least part of a vehicle seat with a noise reducing fabric or so-called "anti-squeak fabric" that has a rough surface to reduce noise due to friction caused when the edge of a side panel and an upholstered surface of vehicle seat rub against each other. However, the use of anti-squeak fabric adversely affects the aesthetic appearance of the vehicle seat. Furthermore if pieces of anti-squeak fabric have to be sewn into another seat upholstery fabric, such as leather, the manufacture of such a vehicle seat becomes time consuming, complex and costly.

The abstract of Japanese patent application no. JP 2001178597 discloses a noise preventive cushion material for a car seat made of polyurethane foam, which produces no noise due to friction caused when the cushion material and a pedestal rub against each other. The surface of the seat cushion material is coated with a fluorine-based lubricant to form a film. The parts coated with the lubricant need to be dried before they can be shipped or used. The drying time necessitates prolonged storage of the parts, which adds to the cost and complexity of the manufacturing process. Furthermore the lubricant may need to be re-applied during the life-time of the car seat, which involves disassembling the car seat.

The abstract of Japanese patent application no. JP 11042136 concerns a cover member of a reclining mechanism which can enhance appearance by preventing the inner parts of the reclining mechanism from being exposed and which can exhibit excellent durability by preventing a seat back from being deformed in excess when reclined. The cover member of a reclining mechanism is mounted in the form of a fin on a shield in such a way as to cover a reclining mechanism linking a set cushion with a seat back. A rib is formed on the upper surface of at least the front part of the edge of a longitudinal notch in a flexible cover member main body in the upper cover of which the notch guiding the upper arm of the reclining mechanism is formed.

Document JP10137065 discloses a vehicle component according to the preamble of claim 1. The document describes a finishing cover to enhance appearance by preventing the inner mechanisms of a reclining mechanism and the like from being exposed, to prevent worsening of the appearance as the result of deflection of a cover member, and to enable an assembly operation to be performed easily and rapidly by decreasing the number of part items and therefore the number of presses. The finisher cover has an inwardly pointed flange part formed at its opening, and a plurality of holes are formed in the inwardly pointed flange part. Then a cover member is formed of a mounting part for mounting on the finisher cover and a cover main body. A plurality of projecting parts of wedge-shaped cross section are formed at the end of the mounting part of the cover member. Also, the plurality of projecting parts of wedge-shaped cross section are inserted into place in the plurality of holes in the inwardly pointed flange part.

### SUMMARY OF THE INVENTION

An object of the present invention is to provide a panel comprising at least one edge that is adapted to abut against at least one surface of at least one upholstered object in a vehicle, whereby noise generated if/when the upholstered object is moved with respect to the panel is reduced or eliminated.

This object is achieved by a panel comprising a panel body and at least one edge whereby at least a part of said edge comprises a contact member comprising a material with a modulus of elasticity that is lower than the modulus of elasticity of the material in said panel body of the panel. The at least one edge abuts against at least one upholstered surface of said at least one upholstered object in a vehicle and said contact member is provided over the whole of said at least one edge, i.e. it extends along the entire area of the at least one panel which makes contact with the surface of said at least one upholstered object.

By providing the panel with such a flexible, elastomeric contact member the squeaking problem is solved because said contact member has superior gripping properties, and hence does not skid or slip across the surface of the upholstered object as do conventional panels.

According to an embodiment of the invention said contact member has a modulus of elasticity of 0.01-1.0 GPa, preferably 0.01- 0.1 GPa.

According to another embodiment of the invention the contact member comprises at least one portion with a surface having a roughness substantially greater than the roughness of said at least one surface of said at least one upholstered object in order to decrease the panel edge area that abuts against the surface of the upholstered object and consequently decrease the noise generated when panel moves relative to the surface of the upholstered object. Said contact member may, for example, comprise ridges or projections on at least part of its surface or it may be marked with lines or grooves. According to another embodiment of the invention the contact member comprises at least one of the following; natural or synthetic rubber, an elastomer, a thermoplastic elastomer (TPE). The term 'thermoplastic elastomer' (TPE) applies to a range of materials that have the characteristics of both rubber and plastic. The manufacturing process of moulded TPE components is similar to that of plastics and the performance of the finished components is like that of natural rubber. However, unlike rubber, TPE's can be recycled.

According to an embodiment of the invention the contact member has an outer exposed decorative surface layer made of a high gloss or coloured elastomer, which is co-extruded with the contact member to improve the aesthetic appearance of the panel.

According to an embodiment of the invention said panel comprises a thermoplastic polymer, such as polypropylene, or any other plastic or substantially rigid material such as metal.

The present invention concerns a vehicle component comprising at least one panel according to any of the embodiments of the invention and at least one upholstered object, such as a vehicle seat, a headrest, an armrest or the stem of a steering wheel. According to an embodiment of the invention said at least one panel is arranged to be located on at least one side of the upholstered object. The panel may comprise actuators, such as buttons or levers, to adjust the position or inclination of the upholstered object.

According to an embodiment of the invention said at least one upholstered object is movable and said at least one panel is fixed with respect to the vehicle body. According to an alternative embodiment said at least one upholstered object is fixed and said at least one panel is movable with respect to the vehicle body. Alternatively both said at least one upholstered object and said at least one panel are movable with respect to the vehicle body.

According to an embodiment of the invention said at least one upholstered object comprises at least one substantially smooth outer surface. Smooth surfaces, although aesthetically pleasing and comfortable, provide very little resistance to slipping and sliding and consequently generate a lot of noise if conventional panels are used; something which is not a problem using the inventive panel. According to another embodiment of the invention said at least one substantially smooth outer surface comprises natural or synthetic leather or vinyl.

The present invention further concerns a vehicle, such as a car, truck, heavy goods vehicle or bus, comprising at least one panel or one vehicle component according to any of the embodiments of the invention.

### BRIEF DESCRIPTION OF THE DRAWINGS

The present invention will hereinafter be further explained by means of examples with reference to the appended figures where;
- Figure 1: is a perspective view of one embodiment of the invention, which shows a panel 10 and an upholstered object 100;
- Figure 2: is a side view of the panel 10 of the Fig. 1 embodiment;
- Figure 3: is a top view of an alternative embodiment of the panel 10 of the invention; and
- Figure 4: is a top view of another alternative embodiment of the panel 10 of the invention.

It should be noted that the drawings have not been drawn to scale and that the dimensions of certain features have been exaggerated for the sake of clarity.

### DETAILED DESCRIPTION OF EMBODIMENTS

The invention will, in the following, be exemplified by embodiments. It should however be realized that the embodiments are included in order to explain the principles of the invention and not to limit the scope of the invention, defined by the appended claims.

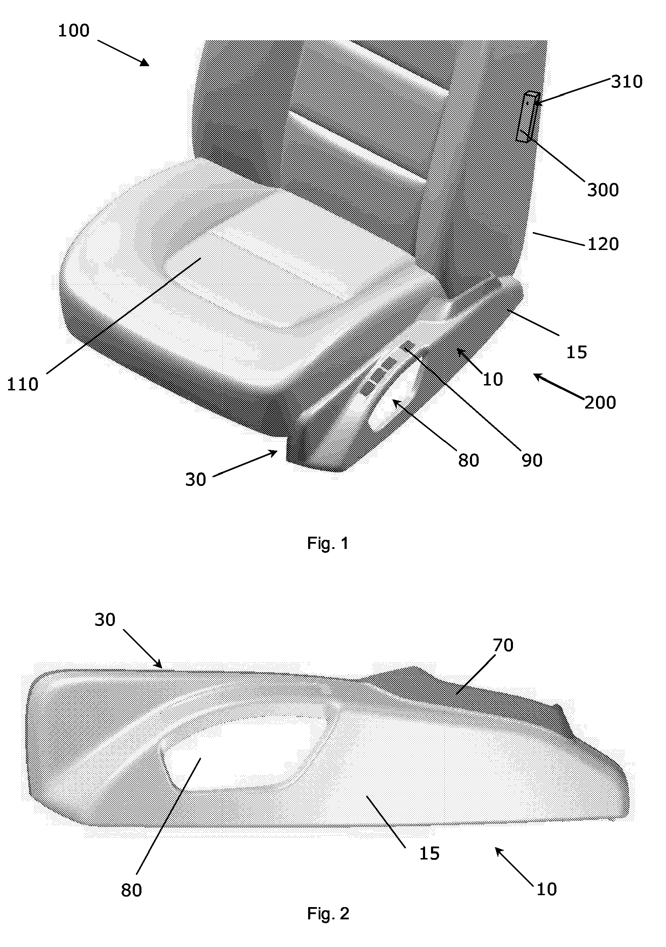

Fig. 1 illustrates a preferred embodiment of the invention, where said at least one upholstered object 100 is a vehicle seat 100 at the front or back of a vehicle, such as a car. Fig. 1 illustrates a panel 10, displayed as an elongated and partially curved plate. However, the panel could assume any of a plurality of different shapes and sizes. Said panel comprises a panel body 15 and at least one edge 20 adapted to abut against at least one surface of at least one upholstered object 100 in a vehicle. Said panel could for example constitute part of a central console located between two adjacent vehicle seats.

Said upholstered object 100 could be arranged to be movable with respect to said panel 10 or said panel 10 could be movable with respect to said upholstered object. Alternatively both the upholstered object 100 and panel 10 could be movable with respect to each other. Furthermore, the upholstered object 100 and the panel 10 could allow a relative motion in one, or some degrees of freedom only. In the embodiment illustrated in Fig. 1 for example, the upholstered object 100 and the panel 10 move together in a longitudinal direction, but the front portion of the upholstered object 100 is movable with respect to the panel 10 in a vertical direction.

In Fig. 1, said upholstered object 100 is illustrated as a vehicle seat 100, comprising a seat part 110 and a back part 120. The upholstered object 100 could however be any other upholstered object in a vehicle which may be brought into relative motion in relation to the panel 10. Furthermore, the panel 10 could be arranged to move across the surface of the upholstered object 100. For example, the panel could constitute part of an actuator 300 for regulating environmental features of the interior of a vehicle. Said actuator 300 could be located on the back part 120 of a vehicle seat 100 and be pivotally mounted about a pivot point 310.

According to the invention, an edge 20 of the panel 10 comprises a contact member 30. The contact member 30 comprises a material with a modulus of elasticity lower than the material in said panel body 15. For example, the fist portion 15 comprises polypropylene having a modulus of elasticity of 1.5 - 2 GPa and the contact member comprises a thermoplastic elastomer having a modulus of elasticity of 0.01 - 0.1 GPa.

According to an embodiment of the invention the contact member 30 and the panel 10 are manufactured as an integral unit. However, it is possible to manufacture the contact member 30 and the panel separately and attach said contact member 30 to the panel 10 using a conventional attachment method, such as gluing, screwing or welding. Furthermore, the contact member 30 could be arranged to extend beyond the edge of the panel 10. In addition, said panel might comprise one or more openings 80, 90 for the attachment of actuators for regulating the position of the vehicle seat 100 for example.

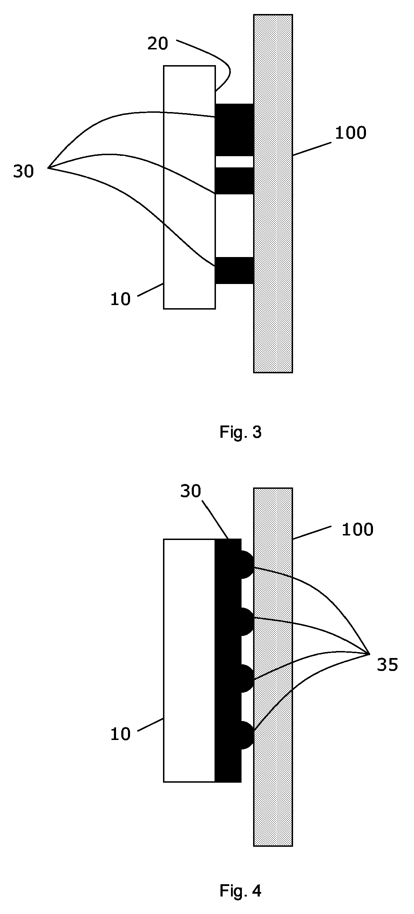

As illustrated in Fig. 4, said contact member 30 could comprise at least one portion with a surface having a roughness substantially greater than the roughness of said at least one surface of said at least one upholstered object 100. In Fig. 4, the surface of the contact member 30 comprises regularly spaced projections or pimples 35, but other means of obtaining a rough surface may be used, such as scoring the surface.

Figs 1 and 2 illustrate that said contact member is provided over the whole of said at least one edge. The exemplified contact member comprises a wider section 70 that may for example be adapted to receive a seat belt fixture. Fig. 3 which does not show an embodiment according to the present inevntion illustrates a panel 10 with an edge 20 adapted to abut against at least one surface of an upholstered object 100 in a vehicle, wherein said edge 20 comprises three separate contact members 30.

Fig. 1 illustrates a vehicle component 200 comprising at least one upholstered object 100, exemplified by a vehicle seat, at least one panel 10, exemplified by a side panel of a vehicle seat.

In one embodiment of the invention, the vehicle component 200 comprises at least one upholstered object 100 that is movable with respect to the vehicle body and at least one panel 10 which is fixed with respect to the vehicle body. In another embodiment of the invention, the vehicle component 200 comprises at least one upholstered object 100 which is fixed with respect to the vehicle body and at least one panel 10 which is movable with respect to the vehicle body. In still another embodiment of the invention, the vehicle component 200 comprises at least one upholstered object 100 which is movable with respect to the vehicle body and at least one panel 10 which is movable with respect to the vehicle body.

Furthermore, as mentioned above, the vehicle component 200 could comprise at least one upholstered object 100 and at least one panel 10, arranged to allow relative motion in one, or some degrees of freedom only, for instance a vertical translation and/or a forward/backward rotation.

Further modifications of the invention within the scope of the claims would be apparent to a skilled person. For example, the edge 20 of the panel 10 could extend over several surfaces of an upholstered object 100, or over several surfaces of several upholstered objects 100.

## Claims

1. A vehicle component (200) comprising at least one upholstered object (100), and at least one panel (10) comprising a panel body (15) and at least one edge (20) whereby said at least one edge (20) comprises a contact member (30) comprising a material with a modulus of elasticity that is lower than the modulus of elasticity of the material in said panel body (15) of said at least one panel (10), **characterized i n that** said at least one edge (20) abuts against at least one upholstered surface of said at least one upholstered object (100) in a vehicle, whereby said contact member (30) is provided over the whole of said at least one edge (20), i.e. it extends along the entire area of the at least one panel (10) which makes contact with the surface of said at least one upholstered object (100).

2. A vehicle component (200) according to claim 1, wherein said contact member (30) has a modulus of elasticity of 0.01-1.0 GPa, preferably 0.01- 0.1 GPa.

3. A vehicle component (200) according to claim 1 or 2, wherein said contact member (30) comprises at least one portion with a surface having a roughness substantially greater than said at least one surface of said at least one upholstered object (100).

4. A vehicle component (200) according to any of the preceding claims, wherein said contact member (30) comprises at least one of the following; natural or synthetic rubber, an elastomer, a thermoplastic elastomer (TPE).

5. A vehicle component (200) according to claim 1, wherein said at least one panel comprises a thermoplastic polymer, such as polypropylene.

6. A vehicle component (200) according to any of the preceding claims, wherein said at least one panel (10) is arranged to be located on at least one side of said at least one upholstered object (100).

7. A vehicle component (200) according to any of the preceding claims wherein said at least one upholstered object (100) is movable with respect to the vehicle body and said at least one panel (10) is fixed with respect to the vehicle body.

8. A vehicle component (200) according to any of claims 1-7 wherein said at least one upholstered object (100) is fixed with respect to the vehicle body and said at least one panel (10) is movable with respect to the vehicle body.

9. A vehicle component (200) according to any of claims 1-7 wherein said at least one upholstered object (100) and said at least one panel (10) are movable with respect to the vehicle body.

10. A vehicle component (200) according to any of the preceding claims, wherein said at least one upholstered object (100) comprises at least one substantially smooth outer surface.

11. A vehicle component (200) according to claim 10, wherein said at least one substantially smooth outer surface comprises natural or synthetic leather or vinyl.

12. A vehicle component (200) according any of the preceding claims, wherein said at least one upholstered object (100) is a vehicle seat.

13. A vehicle, comprising a vehicle component (200) according to any of the preceding claims.

## Patentansprüche

1. Eine Fahrzeugkomponente (200), umfassend wenigstens ein gepolstertes Objekt (100) und wenigstens ein Panel (10), welches einen Panelkörper (15) und mindestens eine Kante (20) umfasst, wobei die wenigstens eine Kante (20) ein Kontaktelement (30) umfasst, das ein Material mit einem Elastizitätsmodul aufweist, der niedriger ist als der Elastizitätsmodul des Materials in dem Panelkörper (15) des wenigstens einen Panels (10), **dadurch gekennzeichnet, dass** die wenigstens eine Kante (20) an wenigstens einer gepolsterten Oberfläche des wenigstens einen gepolsterten Objekts (100) in einem Fahrzeug anliegt, wodurch das Kontaktelement (30) über die Gesamtheit der wenigstens einen Kante (20) zur Verfügung gestellt wird, d.h., es erstreckt sich entlang der gesamten Fläche des wenigstens einen Panels (10), das in Kontakt mit der Oberfläche des wenigstens einen gepolsterten Objekts (100) steht.

2. Eine Fahrzeugkomponente (200) nach Anspruch 1, worin das Kontaktelement (30) einen Elastizitätsmodul von 0,01 - 1,0 GPa, vorzugsweise 0,01 - 0,1 GPa aufweist.

3. Eine Fahrzeugkomponente (200) nach Anspruch 1 oder 2, worin das Kontaktelement (30) wenigstens einen Abschnitt mit einer Oberfläche aufweist, deren Rauheit deutlich größer ist als die der wenigstens einen Oberfläche des wenigstens einen gepolsterten Objekts (100).

4. Eine Fahrzeugkomponente (200) nach einem der vorhergehenden Ansprüche, worin das Kontaktelement (30) wenigstens eines der Folgenden beinhaltet: natürlichen oder synthetischen Gummi, ein Elastomer, ein thermoplastisches Elastomer (TPE).

5. Eine Fahrzeugkomponente (200) nach Anspruch 1, worin das wenigstens eine Panel ein thermoplastisches Polymer beinhaltet, etwa Polypropylen.

6. Eine Fahrzeugkomponente (200) nach einem der vorhergehenden Ansprüche, worin das wenigstens eine Panel (10) so ausgelegt ist, dass es sich an wenigstens einer Seite des wenigstens einen gepolsterten Objektes (100) befindet.

7. Eine Fahrzeugkomponente (200) nach einem der vorhergehenden Ansprüche, worin das wenigstens eine gepolsterte Objekt (100) gegenüber der Karosserie des Fahrzeugs beweglich ist, und das wenigstens eine Panel (10) gegenüber der Karosserie des Fahrzeugs feststeht.

8. Eine Fahrzeugkomponente (200) nach einem der Ansprüche 1 bis 7, worin das wenigstens eine bewegliche Objekt (100) gegenüber der Karosserie des Fahrzeugs feststeht und das wenigstens eine Panel (10) gegenüber der Karosserie des Fahrzeugs beweglich ist.

9. Eine Fahrzeugkomponente (200) nach einem der Ansprüche 1 bis 7, worin das wenigstens eine gepolsterte Objekt (100) und das wenigstens eine Panel (10) gegenüber der Karosserie des Fahrzeugs beweglich sind.

10. Eine Fahrzeugkomponente (200) nach einem der vorhergehenden Ansprüche, worin das wenigstens eine gepolsterte Objekt (100) wenigstens eine im Wesentlichen glatte äußere Oberfläche aufweist.

11. Eine Fahrzeugkomponente (200) nach Anspruch 10, worin die wenigstens eine im Wesentlichen glatte äußere Oberfläche natürliches oder künstliches Leder oder Vinyl umfasst.

12. Eine Fahrzeugkomponente (200) nach einem der vorhergehenden Ansprüche, worin das wenigstens eine gepolsterte Objekt (100) ein Fahrzeugsitz ist.

13. Ein Fahrzeug, umfassend eine Fahrzeugkomponente (200) nach einem der vorhergehenden Ansprüche.

## Revendications

1. Composant de véhicule (200) comprenant au moins un objet rembourré (100), et au moins un panneau (10) comprenant un corps de panneau (15) et au moins un bord (20), ledit au moins un bord (20) comprenant un élément de contact (30) qui comprend un matériau ayant un module d'élasticité qui est inférieur au module d'élasticité du matériau dudit corps de panneau (15) dudit au moins un panneau (10), **caractérisé en ce que** ledit au moins un bord (20) est en appui contre au moins une surface rembourrée dudit au moins un objet rembourré (100) dans un véhicule, ledit élément de contact (30) étant présent sur la totalité dudit au moins un bord (20), c'est-à-dire qu'il s'étend sur toute la surface dudit au moins un panneau (10) qui est en contact avec la surface dudit au moins un objet rembourré (100).

2. Composant de véhicule (200) selon la revendication 1, dans lequel ledit élément de contact (30) a un module d'élasticité de 0,01 à 1,0 GPa, de préférence de 0,01 à 0,1 GPa.

3. Composant de véhicule (200) selon la revendication 1 ou 2, dans lequel ledit élément de contact (30) comprend au moins une partie dont la surface a une rugosité substantiellement supérieure à celle de ladite au moins une surface dudit au moins un objet rembourré (100).

4. Composant de véhicule (200) selon l'une quelconque des revendications précédentes, dans lequel ledit élément de contact (30) comprend au moins l'un des matériaux suivants : du caoutchouc naturel ou synthétique, un élastomère, un élastomère thermoplastique (TPE).

5. Composant de véhicule (200) selon la revendication 1, dans lequel ledit au moins un panneau comprend un polymère thermoplastique, comme du polypropylène.

6. Composant de véhicule (200) selon l'une quelconque des revendications précédentes, dans lequel ledit au moins un panneau (10) est agencé pour être situé sur au moins un côté dudit au moins un objet rembourré (100).

7. Composant de véhicule (200) selon l'une quelconque des revendications précédentes, dans lequel ledit au moins un objet rembourré (100) est mobile par rapport à la carrosserie du véhicule et ledit au moins un panneau (10) est fixe par rapport à la carrosserie du véhicule.

8. Composant de véhicule (200) selon l'une quelconque des revendications 1 à 7, dans lequel ledit au moins un objet rembourré (100) est fixe par rapport à la carrosserie du véhicule et ledit au moins un panneau (10) est mobile par rapport à la carrosserie du véhicule.

9. Composant de véhicule (200) selon l'une quelconque des revendications 1 à 7, dans lequel ledit au moins un objet rembourré (100) et ledit au moins un panneau (10) sont mobiles par rapport à la carrosserie du véhicule.

10. Composant de véhicule (200) selon l'une quelconque des revendications précédentes, dans lequel ledit au moins un objet rembourré (100) comprend au moins une surface extérieure substantiellement lisse.

11. Composant de véhicule (200) selon la revendication 10, dans lequel ladite au moins une surface extérieure substantiellement lisse comprend du cuir naturel ou synthétique ou du vinyle.

12. Composant de véhicule (200) selon l'une quelconque des revendications précédentes, dans lequel ledit au moins un objet rembourré (100) est un siège de véhicule.

13. Véhicule comprenant un composant de véhicule (200) selon l'une quelconque des revendications précédentes.
